# EUROPEAN PATENT APPLICATION

(11) **EP 0 531 074 A2**
(43) Date of publication of application: **10.03.1993**
(21) Application number: 92307887.7
(22) Date of filing: 28.08.1992
(51) Int. Cl.: E06B 9/11, B60J 1/20, B60J 7/00

(54) **Blinds, especially for vehicles**

(30) Priority: 30.08.1991 GB 9118583
(71) Applicant: MIRLE INTERNATIONAL LIMITED, Hitchin, Hertfordshire SG5 1AL (GB)
(72) Inventor: Muller, Michael Edward, deceased (GB)
(74) Representative: W.P. THOMPSON & CO.

(57) **Abstract**

A sun blind, especially for fitting in the roof of a motor vehicle, comprises a cassette holding a cover member (20) which is extensible and retractable to any desired setting between limit positions. A cord (36) or the like travels around pulleys (34^{I}, 34^{II}, 34^{III}, 34^{IV}, 34^{V}, 34^{VI}) generally in the plane of the cover member (20) and is coupled to reinforcing inserts (21, 22) in the cover member (20) so that the latter is entrained by the cord (36) when the cord (36) is moved by a slider (42).

## Description

This invention relates generally to blinds which perform a screening function. The invention is more particularly concerned with devices for operating such blinds.

The invention is particularly concerned with blinds which are intended for use in vehicles, for use in conjunction with glazed areas, especially in the roof of a vehicle. The term "glazed" is intended to include not just glass areas but also areas of transparent or translucent plastics material.

There is a need in motor vehicles for sun blinds to be used in conjunction with glazed roof areas, in particular for screening purposes. Conventional sun blinds suffer from a number of disadvantages. The conventional blind for use in a vehicle comprises a spring-loaded roller blind which is secured by a latch mechanism. When the latch mechanism is released, the blind is retracted to its housed position. With such blinds it is not possible to position the blind in an intermediate position: the blind is either fully extended or fully retracted. Also, the use of a latch normally requires a knob or handle projecting into the interior of the vehicle, and this can be a safety hazard. Also it is not always easy for the user to operate the latch, particularly if it is operated by the driver while driving. Moreover, such blinds are generally positioned below the glazed roof panel, in the manner of a curtain, which means that the blind can become caught up on other objects or otherwise damaged. In certain vehicles, with a wide glazed roof area, two separate blinds are used, in side by side relationship, with a central gap between them. This central gap is necessary in order to accommodate the winding mechanism for the sunroof. Compatibility of a vehicle sun blind with the winding mechanism for the sunroof is a problem in many vehicles.

It is an object of the present invention to provide an improved blind for use in conjunction with a glazed area, especially within a vehicle, which overcomes or at least minimises the disadvantages set out above.

In accordance with the present invention there is provided a blind for a glazed area, comprising a cover member movable to any desired setting between extended and retracted limit positions, and motive means displaceable along a defined track generally in the plane of the cover member between limit positions, the motive means being coupled to the cover member so that the cover member is entrained by the motive means upon movement of the latter.

Preferably, a cord, wire or the like is connected to the cover member and traverses guide means, with movement of the cord or the like causing movement of the cover member. In one arrangement sliding of the cord in one direction causes extension or retraction movement of the cover member in a direction at right-angles thereto.

In the case of a blind fitted within a motor vehicle, the cover member and associated cord or the like are housed within a cassette, e.g. a plastics moulding, both for aesthetic reasons and in order not to have any parts projecting into the vehicle cabin. Simple horizontal movement of a pull cord is all that is required in order to effect movement of the cover member.

One presently preferred embodiment of sun blind in accordance with the invention, for use in association with a glazed roof panel of a vehicle, will now be described by way of example and with reference to the accompanying drawings.

In the drawings:
Fig. 1 is a plan view of a sun blind cassette in accordance with the invention;
Fig. 2 is a front view of the cassette of Fig. 1; and,
Fig. 3 is a side view of the cassette of Fig. 1.

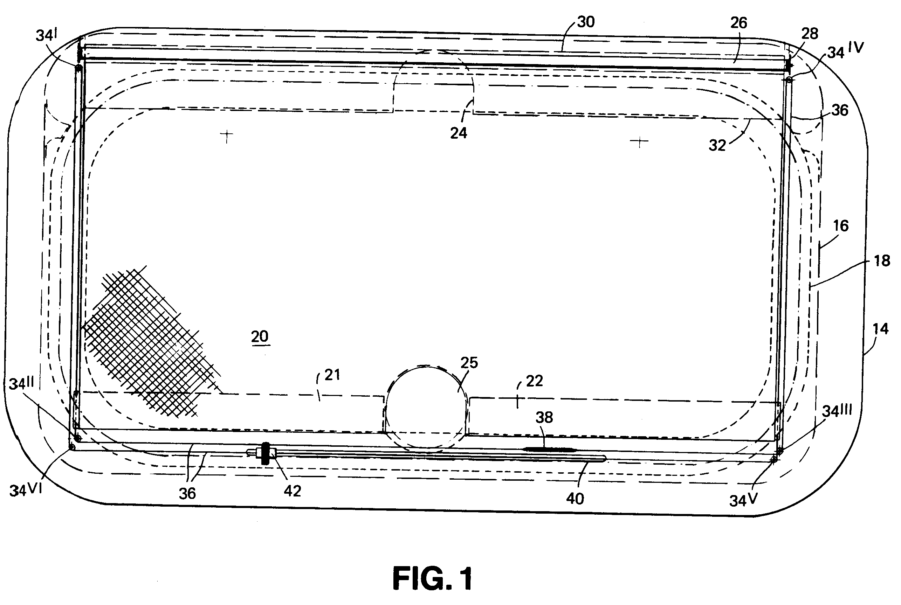

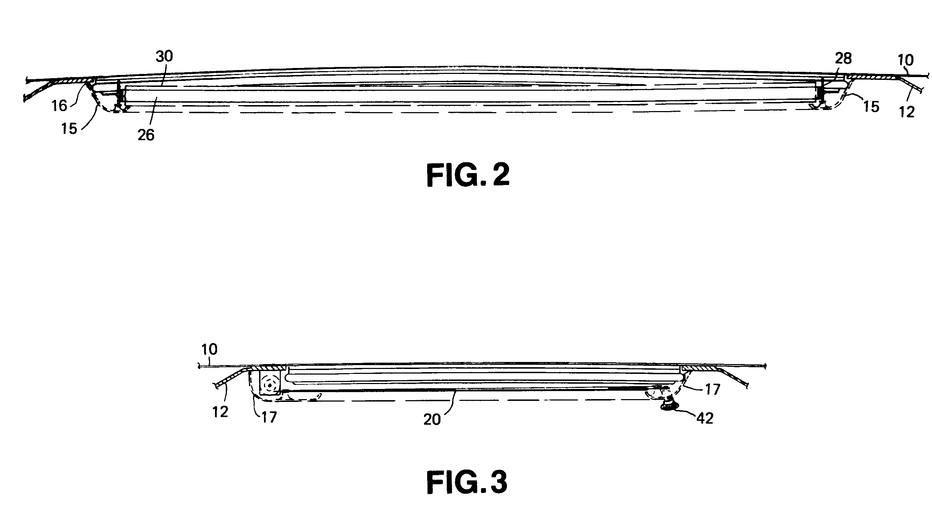

The sun blind illustrated in the drawings is formed as an injection moulded cassette for insertion into the roof of a motor vehicle. In Figs. 2 and 3 the roof panel of the vehicle is indicated at 10 and the headlining inside the roof at 12. In Fig. 1 the headlining depression is indicated at 14. The external limit of the injection moulded plastics cassette is indicated at 16. The external limit of an aluminium extrusion within the cassette is indicated at 18. The cassette is held in place at the sides by side cassette clips 15 (Fig.2) on the straight sections of the aluminium extrusion and at the front and rear by cassette clips 17 (Fig.3) on the straight sections of the aluminium extrusion.

The cover member is indicated at 20 and can be made of any suitable fabric or plastics material for example. The cover member incorporates two plastics inserts 21, 22 along its leading edge for rigidity. Each insert 21, 22 has two holes adjacent to its outer end, and the outer end portions of the inserts project beyond the cover member itself, as shown in Fig. 1, to make the holes accessible. The leading edge of the cover member 20 is provided with a generally semi-circular recess 24 to accommodate a handle or other winding mechanism 25 for the glazed panel above the blind. The cover member 20 is borne on a cylindrical roller 26 which has bearing plates 28 at each end. The broken line 30 indicates the diameter of the rolled cover member when fully retracted. In its fully retracted position the leading edge of the cover member is in the position indicated by the broken line 32.

Around the cassette are fitted six pulleys 34^{I}, 34^{II}, 34^{III}, 34^{IV}, 34^{V}, 34^{VI} around which a cord 36 extends. The cord 36 passes through the holes in the plastics inserts 21, 22 of the cover member and runs around the pulleys in a closed system. There is thus a length of cord 36 running in each direction along each of three sides of the cassette. The cord 36 incorporates a tension spring 38. Towards the front of the cassette is a slot 40 through which the cord 36 is visible and accessible. Attached to the cord in this area is a slider 42. It will be readily appreciated that movement of the slider 42 from one end of the slot 40 to the other end causes the cord 36 to travel around the pulleys and causes the cover member 20 to move from its fully retracted position to its fully extended position, and vice versa. In other words, movement of the slider 42 lengthwise of the cassette results in movement of the cover member in a direction at right-angles thereto. Alternatively, the slider could be positioned at the side of the cassette, attached to that run of the cord 36, for movement parallel to the direction of movement of the cover member. It is only necessary that an appropriate means is provided to permit the user readily to effect a displacement of the cord 36 to the extent desired.

It will be appreciated from the drawing that the edges of the cover member 20 are recessed behind the plastics moulding.

Various modifications and alternatives can be used within the scope of the invention. For example instead of using six pulleys one could use a smaller number of pulleys and provide simple guides or runners for the cord 36.

## Claims

1. A blind for a glazed area, comprising a cover member (20) movable to any desired setting between extended and retracted limit positions, and motive means (36) displaceable along a defined track generally in the plane of the cover member between limit positions, the motive means being coupled to the cover member so that the cover member is entrained by the motive means upon movement of the latter.

2. A blind as claimed in claim 1, characterised in that the motive means comprises a cord, wire or the like (36) which traverses guide means (34^{I}, 34^{II}, 34^{III}, 34^{IV}, 34^{V}, 34^{VI}) and is coupled to the cover member (20).

3. A blind as claimed in claim 2, characterised in that the guide means comprises pulleys (34^{I}, 34^{II}, 34^{III}, 34^{IV}, 34^{V}, 34^{VI}) positioned around the periphery of the extended cover member (20).

4. A blind as claimed in claim 2 or 3, characterised in that the cord, wire or the like (36) extends in a double run along each of three sides of the cover member (20), and a slider means (42) is connected to one of said runs of the cord, wire or the like to effect movement thereof.

5. A blind as claimed in claim 2, 3 or 4, characterised in that the cord, wire or the like (36) is threaded through the cover member (20).

6. A blind as claimed in any preceding claim, characterised in that the cover member (20) has reinforcing means (21, 22) extending outwardly at opposite sides thereof, and the motive means (36) is coupled to the reinforcing means (21, 22).

7. A blind as claimed in any preceding claim, characterised in that the motive means is manually movable by the user in a direction at right-angles to the direction in which the cover member (20) moves between its extended and retracted positions.

8. A blind as claimed in any preceding claim, characterised in that the cover member (20) and the motive means (36) are housed within a cassette which is adapted to be fitted into a vehicle.
